# EUROPÄISCHE PATENTANMELDUNG

(11) **EP 0 820 202 A2**
(43) Veröffentlichungstag der Anmeldung: **21.01.1998**
(21) Anmeldenummer: 97110776.8
(22) Anmeldetag: 01.07.1997
(51) Int. Cl.: H04Q 1/39

(54) **Verfahren und Schaltungsanordnung zur Auswertung von analogen Fernsprechsignalen**

(30) Priorität: 03.07.1996 DE 19626795
(71) Anmelder: Holmer, Günter, 84180 Loiching (DE)
(72) Erfinder: Holmer, Günter, 84180 Loiching (DE)

(57) **Zusammenfassung**

Sendeseitige analoge Impulswahl-Informationssignale werden nach Herstellung einer Verbindung zwischen Fernsprechteilnehmern (T1, T2) einer Verstärkungs- und Impulsformeinrichtung (RV, IFE) zugeführt, wo sie aufbereitet werden. Eine daran sich anschließende Auswerteeinrichtung (ZE) leitet die aufbereiteten Signale bestimmungsgemäßen Endgeräten zu. Anwendbar in der Fernsprechtechnik.

## Beschreibung

Die Erfindung betrifft ein Verfahren und eine Schaltungsanordnung zur Auswertung von analogen Fernsprechsignalen, insbesondere einer Impulswahlinformation von einem Fernsprechteilnehmer zu einem anderen Fernsprechteilnehmer.

Mit zu den bekanntesten Wahlverfahren zur Herstellung einer Fernsprechverbindung von einem Fernsprechteilnehmer zu einem anderen Fernsprechteilnehmer gehört das Impulswahlverfahren (IWV), bei dem von einem Fernsprechteilnehmer abgehende Wählimpulse im allgemeinen zu einem Fernsprechamt übertragen werden, wodurch dann aufgrund dieser Wählimpulse eine Verbindung zu einem anderen Fernsprechteilnehmer hergestellt wird.

Seit geraumer Zeit werden Wahlinformationen zur Initialisierung von Steuerungs- sowie anderen Anwendungen verwendet, was durch ein zweites bekanntes Wahlverfahren möglich wurde, bei dem Tonsignale, die sicher und problemlos auswertbar sind, mittels des sogenannten MFV-Wahlverfahrens von einem Amtsteilnehmer zu einem anderen Amtsteilnehmer übermittelt und dort ausgewertet werden. Dieses Verfahren wurde bisher jedoch für das reine Impulswahlverfahren nicht angewendet, da nach der eigentlichen Rufnummer weitere ausgesandte Impulse nur in Form von Impulsen beim gerufenen Fernsprechteilnehmer ankommen, die im allgemeinen aufgrund ihrer schlechten Qualität (lediglich Nadelimpulse, schwache Impulse usw.) für die genannten Anwendungen bislang nicht ausgewertet wurden.

Aufgabe der Erfindung ist es, ein Verfahren und eine Schaltungsanordnung aufzuzeigen, wie beim Impulswahlverfahren derartige Impulse für Steuerungs- und/oder Informationszwecke nutzbar gemacht werden können.

Die Aufgabe wird erfindungsgemäß durch den Patentanspruch 1 und 3 gelöst.

Durch das Verfahren und die Schaltungsanordnung nach der Erfindung können die nach einer hergestellten Fernsprechverbindung übermittelten Wählimpulse eindeutig ausgewertet werden, d.h., die sogenannten IWV-Restimpulse, die hier bei Gleichspannungssprüngen entsprechen, die je nach Leitungslänge und Nebengeräuschen mehr oder wendiger stark gedämpft sind, werden durch die Schaltungsanordnung nach der Erfindung vor ihrer eigentlichen Verwendung zunächst aufbereitet.

Das Verfahren gemäß der Erfindung wird nun an Hand einer Schaltungsanordnung sowie mehrerer dazugehöriger graphischer Darstellungen näher erläutert.

Es zeigen:
Fig. 1 schematisch den allgemeinen Aufbau zwischen einem Fernsprech-Amtsteilnehmer 1 und einem Fernsprech-Amtsteilnehmer 2,
Fig. 2 eine Schaltungsanordnung zur Auswertung von Restimpulsen,
Fig. 3A bis 3D Schwingungsformen, die an verschiedenen Punkten der in Fig. 2 gezeigten Schaltungsanordnung auftreten.

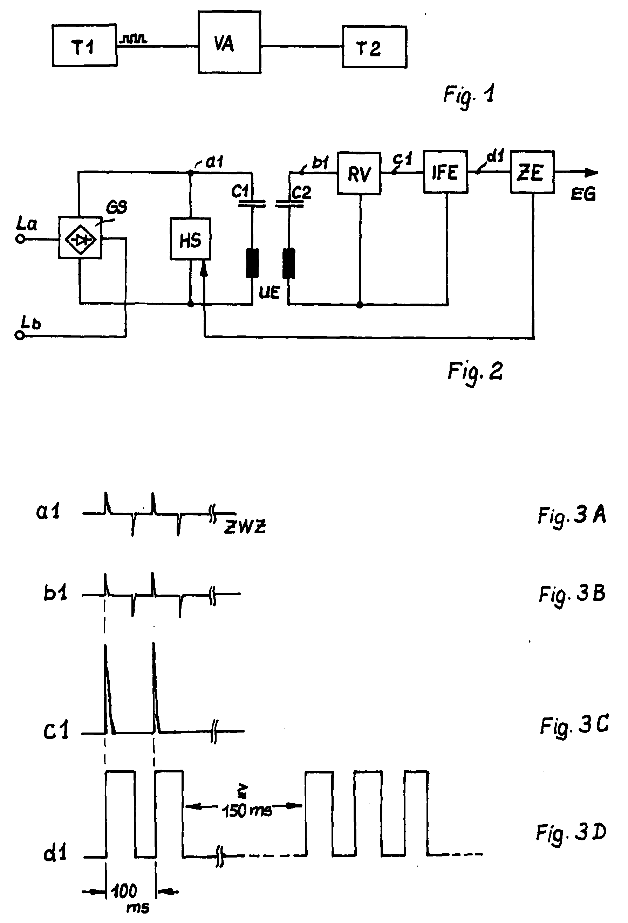

Fig. 1 zeigt schematisch den bekannten Aufbau zur Übermittlung einer Information, beispielsweise von einem Fernsprech-Amtsteilnehmer T1 zu einem zweiten Fernsprech-Amtsteilnehmer T2. Vom Amtsteilnehmer T1 ausgesandte Impulssignale gelangen zu einem Vermittlungsamt VA, welches je nach der Anzahl der Impulse eine Verbindung zu einem anderen Amtsteilnehmer T2 herstellt. Dieser zweite Amtsteilnehmer T2 (oder auch umgekehrt der erste Amtsteilnehmer oder beide) soll nun gemäß der Erfindung eine Zusatzeinrichtung besitzen.

Vom Vermittlungsamt VA zum Amtsteilnehmer T2 werden nach dem Aufbau der Verbindung (hier zum Teilnehmer T2), d.h., nach Belegung der Leitung normalerweise keine weiteren Wählimpulse übertragen, da diese normalerweise nicht genutzt werden. Sendet nun der Teilnehmer T1 trotzdem nach Aufbau der Verbindung gewollt weitere Signale, d.h. zusätzlich zur Möglichkeit der Übertragung einer Sprechinformation, so gelangen diese zum Teilnehmer T2 im allgemeinen in Form von Nadelimpulsen, die mehr oder weniger stark gedämpft sein können. Damit sind zunächst diese weiteren Signale (anschließend als Restimpulse bezeichnet) nicht sicher auswertbar.

Fig. 2 zeigt nun eine Schaltungsanordnung, die derartige Restimpulse aufbereitet, so daß daraus eine sichere Information herleitbar ist.

Über eine Leitung La, Lb gelangen die Restimpulse über eine Gleichrichterschaltung GS, die je nach den entsprechenden Erfordernissen auch für andere Zwecke genutzt werden kann, zu einer Halteschaltung HS, die neben dem Gleichstromwiderstand auch den Abschluß der analogen Nachrichtenleitung bestimmt.

Die Restimpulse gelangen dann zu einem nachgeschlagenen Übertrager UE, der über Kondensatoren C1, C2 sowohl die Primärseite als auch die Sekundärseite galvanisch entkoppelt, die Wechselstromsignale jedoch überträgt. Damit gelangen positive und negative Nadelimpulse auf die Sekundärseite des Übertragers UE. Nachfolgend zum Übertrager UE ist ein Regelverstärker RV angeordnet, der die negativen (oder positiven Nadelimpulse) abschneidet und aufgrund seiner kurzen ihm eigenen Zeitkonstante verstärkte Impulse einer Polarität mit einem gleichmäßigen Pegel erzeugt. Damit werden Dauergeräusche und Nebengeräusche unterdrückt. An den Regelverstärker RV schließt sich eine Impulsformereinheit IFE an, die aus diesen Nadelimpulsen periodisch zusammenhängende Rechteckimpulse einer vorgegebenen Dauer erzeugt und diese an einen an die Impulsformereinheit IFE nachgeschalteten Rechner ZE liefert, der die entsprechende Impulse zählt und verarbeitet, d.h. periphere Geräte ansteuert, Sicherungszwecke einleitet usw.

Fig. 3a bis 3d zeigt die oben erwähnten dazugehörigen Schwingungsformen. So ist in Fig. 3A die Schwingungsform am Punkt a1 von Fig. 2 gezeigt, wobei die Bezeichnung ZWZ die Zwischenwahlzeit bedeutet, die die Zeitdauer zwischen IWV-Ziffern andeutet. In Fig. 3C ist angedeutet, daß das Zeitintervall von einem Nadelimpuls zum anderen 100 ms beträgt. Fig. 3D zeigt Rechteckimpulse am Punkt d1 von Fig. 2, wobei jeder Impuls eine Zeitdauer von ca. 50 ms hat, woran sich eine entsprechende Lücke anschließt, so daß die Gesamtzeit einer Periode wieder 100 ms beträgt.

Das erfindungsgemäße Verfahren und die dazugehörige Schaltungsanordnung ist nicht nur auf Steuerungs- und Abfragefunktionen beschränkt. So können mit Hilfe dieses Verfahrens und der Schaltungsanordnung beispielsweise Durchwahlfunktionen für Fernsprechanlagen bereitgestellt werden. Nach dem Aufbau der Verbindung kann zusätzlich ein Code gesendet werden, der beispielsweise die Berechtigung, wenn dem rufenden Teilnehmer der Code bekannt ist, einen Zugriff für ein Faxgerät ermöglicht, um ungewollte Faxnachrichten zu unterbinden.

## Patentansprüche

1. Verfahren zur Auswertung einer analogen sendeseitigen Impulswahlinformation von einem Fernsprechteilnehmer (T1) zu einem anderen Fernsprechteilnehmer (T2), wobei
die von dem einen Fernsprechteilnehmer (T1) ankommenden nach Herstellung einer Fernsprechverbindung gesendeten Signale und Überprüfung ihres Abschlusses einer Verstärkungs- und Impulsformeinrichtung (RV, IFE) zugeführt werden, die die Wählsignale verstärkt und formt, und
die von der Verstärkungs- und Impulsformeinrichtung gewonnenen Signale einer Auswerte- und Zähleinrichtung (ZE) zugeführt werden, die die Signale verarbeitet und entsprechend ihrer vorher festgelegten Bestimmung einem oder mehreren bestimmungsgemäßen Endgeräten (EG) zuleitet.

2. Verfahren nach Anspruch 1, wobei die Verstärkungs- und Impulsformeinrichtung einen Regelverstärker (RV) aufweist, der eine Zeitkonstante aufweist, die so kurz ist, daß er lediglich Signale mit einer steilen Flanke auswertet.

3. Schaltungsanordnung zur Auswertung einer analogen amtsseitigen Impulswahlinformation von einem Fernsprechteilnehmer zu einem anderen Fernsprechteilnehmer nach Anspruch 1, mit:
einer Halteschaltung (HS) zur Bestimmung des Abschlusses der analogen Nachrichtenleitung,
einer Einrichtung (RV, IFE) zur Aufbereitung der Signale,
einer Zähleinrichtung (ZE) zum Zählen der aufbereiteten Signale,
und einer Einrichtung (ZE) zur Auswertung der Impulse zur Ansteuerung von weiteren Einrichtungen.

4. Schaltungsanordnung nach Anspruch 3, wobei die Einrichtung zur Aufbereitung der Impulse aus einem Regelverstärker (RV) besteht, der aus ankommenden Restimpulsen unterschiedlicher Polarität Impulse einer einzigen Polarität auswählt und diese auf einen bestimmten Pegel verstärkt, und einer Impulsformereinheit (IFE), die die vom Regelverstärker gelieferten Impulse in Rechtecksignale einer vorgegebenen Dauer und Periode umwandelt.

5. Schaltungsanordnung nach Anspruch 4, wobei der Regelverstärker (RV) eine kurze Zeitkonstante besitzt.

6. Schaltungsanordnung nach Anspruch 3, wobei die ausgewerteten Restimpulse zur Ansteuerung von vom gerufenen Teilnehmer (T2) geschützten Nachrichteneinrichtungen dient, nachdem in der Auswerteeinrichtung (ZE) ein Erkennungscode anhand der übermittelten Restimpulse ausgewertet wurde.
